# EUROPÄISCHE PATENTSCHRIFT

(11) **EP 0 706 648 B1**
(45) Veröffentlichungstag und Bekanntmachung des Hinweises auf die Patenterteilung: **03.09.1997**
(21) Anmeldenummer: 94918294.3
(22) Anmeldetag: 18.06.1994
(51) Int. Cl.: G01N 21/43, G01N 21/47, B60S 1/08

(54) **ANORDNUNG ZUM MESSEN ODER ERKENNEN EINER VERÄNDERUNG AN EINEM RÜCKSTRAHLENDEN ELEMENT**
ARRANGEMENT FOR MEASURING OR DETECTING A CHANGE IN A RETRO-REFLECTIVE COMPONENT
SYSTEME DE MESURE OU DE DETECTION D'UNE MODIFICATION INTERVENANT SUR UN ELEMENT REFLECHISSANT

(30) Priorität: 02.07.1993 DE 9309837 U; 19.11.1993 DE 4339572; 19.11.1993 DE 4339574; 03.02.1994 DE 4403221
(43) Veröffentlichungstag der Anmeldung: 17.04.1996
(73) Patentinhaber: Reime, Gerd, D-75328 Schömberg (DE)
(72) Erfinder: Reime, Gerd, D-75328 Schömberg (DE)
(74) Vertreter: Reinhardt, Harry
(86) Internationale Anmeldenummer: DE9400714
(87) Internationale Veröffentlichungsnummer: WO9501561

(56) Entgegenhaltungen:
- EP-A- 0 408 304
- EP-A- 0 520 302
- DE-A- 4 229 491
- US-A- 4 620 141
- PATENT ABSTRACTS OF JAPAN vol. 10, no. 157 (P-464) (2213) 6. Juni 1986 & JP,A,61 011 637 (NIPPON DENKI K.K.) 20. Januar 1986

## Beschreibung

### GEBIET DER ERFINDUNG

Die Erfindung betrifft eine Anordnung zum Messen oder Erkennen einer Veränderung an einem oder infolge eines rückstrahlenden Elements, das von der Anordnung durch ein für eine bestimmte Strahlung durchlässiges Medium getrennt ist.

### STAND DER TECHNIK

In vielen Fällen besteht der Wunsch, Veränderungen an einem rückstrahlenden Element, hervorgerufen z.B. durch eine bestimmte Benetzung einer Oberfläche zu erkennen, um daraus beispielsweise Steuerbefehle zum Schließen von Fenstern oder anderen Öffnungen oder zum Entfernen einer störenden Benetzung abzuleiten. Als reflektierendes Element kann z.B. eine innere Reflexionsfläche einer strahlungsdurchlässigen Platte oder Wand (innere oder Totalrefelexion), ein Spiegel oder auch jedes Mittel in Frage kommen, das gegebenenfalls auch nur Streulicht rückstrahlt, wie z.B. eine sich der Anordnung nähernde Hand. Unter dem Begriff Benetzung einer Oberfläche wird das Bedecken oder Berieseln der Oberfläche mit einzelnen Flüssigkeitstropfen oder das Auftreffen von Flüssigkeitstropfen auf diese Oberfläche verstanden, bis hin zu einem auf die Oberfläche aufgebrachten Flüssigkeitsfilm oder Schaum oder einer auf die Oberfläche aufgelaufenen oder auflaufenden Flüssigkeitsschicht einer bestimmten Schichtdicke.

Durch ein Erkennen des Umfanges der Veränderung der Reflexionsverhältnisse können so z.B. Lageänderungen oder das Auftreten eines vor der Anordnung beweglichen oder bewegten Gegenstandes erfaßt werden. Ist die Veränderung eine Benetzung, so können z.B. durch ein Messen der Menge der benetzenden Flüssigkeit pro Flächeneinheit und/oder pro Zeiteinheit auf der benetzten Oberfläche gezieltere Steuerbefehle abgeleitet werden, mit denen beispielsweise die Benetzung geregelt, Schließvorgänge abhängig von der bestehenden oder zu erwartenden Flüssigkeitsmenge gesteuert oder ein Vorgang zur Beseitigung der Benetzung abhängig von der Vorgeschichte der Verursachung der Benetzung optimal gesteuert werden kann.

Hierzu wurde bereits in der EP-A 408 304 eine Anordnung zum Messen von Feuchtigkeit auf einer Scheibe mit zwei Meßstrecken vorgeschlagen mit einer Schalteranordnung zum sequentiellen Wirksamschalten der beiden Meßstrecken. Die Signale der Meßstrecken werden über Filter einer Auswerteanordnung zugeführt. Jedes Signal wird einzeln ausgewertet und bei Auftreten eines Fehlers auf einer Meßstrecke wird ein Steuersignal ausgelöst.

Aus der US-A 4,620,141 ist eine Anordnung ebenfalls mit mehreren Meßstrecken bekannt, die gepulst betrieben werden. Die Auswertung erfolgt über eine Brückenschaltung.

### OFFENBARUNG DER ERFINDUNG

Der Erfindung liegt die Aufgabe zugrunde, eine Anordnung der eingangs genannten Art derart auszugestalten, daß eine zusätzliche, aus dem Umfeld der Anordnung zum Messen oder Erkennen einer Veränderung in diese Anordnung eindringende und sich der Strahlung der Anordnung überlagernde Fremdstrahlung, die Messung oder Erkennung der Veränderung selbst dann nicht wesentlich beeinflußt, stört und verfälscht, wenn die zusätzliche Fremdstrahlung einen wesentlichen oder sogar weit überwiegenden Anteil gegenüber der zum Messen oder Erkennen abgestrahlten Strahlung ausmacht.

Diese Aufgabe wird gelöst durch eine Anordnung mit den Merkmalen der Ansprüche 1 oder 2 .

Die Strahlung zum Messen oder Erkennen einer Veränderung an einem rückstrahlenden Element durchdringt so im Falle einer Benetzung einer Außenfläche einer Platte oder Wand sowohl die Platte oder Wand als auch die die Platte oder Wand benetzende Flüssigkeit ohne wesentliche Dämpfung und ein zunehmend größerer Anteil von der mit einem zur Senkrechten durch die Platte oder Wand zunehmenden Abstrahlungswinkel in die Platte oder Wand emittierten Strahlung wird von der Grenzfläche der äußeren Oberfläche der Platte oder Wand reflektiert, bis hin zu einem Grenzwinkel des Einstrahlwinkels, ab dem an einer optisch einwandfreien Grenzfläche eine Totalreflexion der eingestrahlten Strahlung an dieser Oberfläche auftritt.

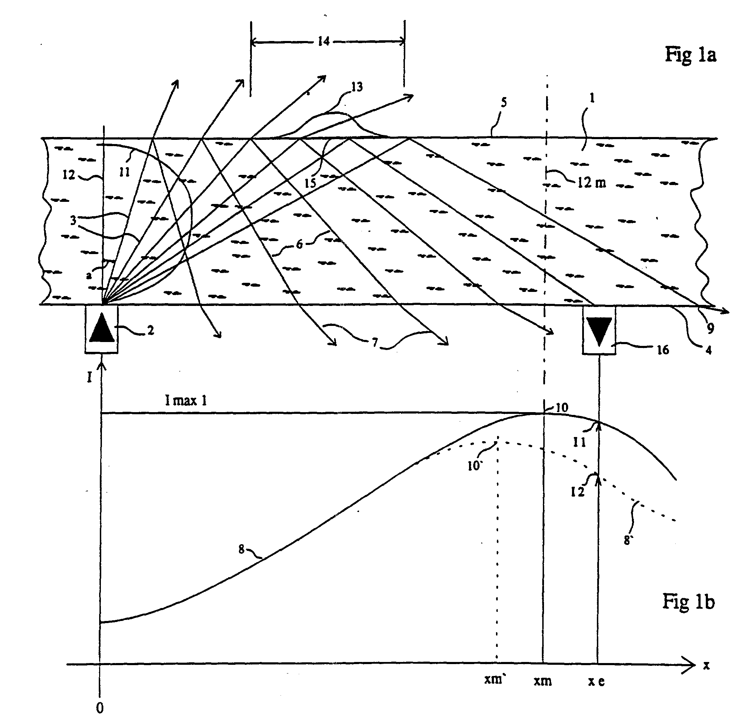

So entsteht in einer die Platte oder Wand am Ort der Strahlungsquelle senkrecht durchsetzenden Ebene abhängig von der Richtungscharakteristik der Strahlungsstärke der an die Platte oder Wand angekoppelten Strahlungsquelle und der Dämpfung des Strahlunqsflusses in der Platte oder Wand eine Kurve der Strahlungsstärke eines aus der inneren Oberfläche der Platte oder Wand, an die die Strahlungsquelle angekoppelt ist, austretenden Strahlungsflusses. Diese Strahlungsflußkurve weist zwischen dem Ankopplungsort der Strahlungsquelle und dem Ausstrahlungsbereich der unter dem Grenzwinkel der total reflektierten Strahlung ein im allgemeinen breites Maximum auf, wie in Fig 1 schematisch dargestellt ist. An diesem Maximum ist die größte Änderung der Kurve der Strahlungsstärke zu erwarten, wenn die Reflexion der in der Platte oder Wand übertragenen Strahlung an der benetzbaren Oberfläche der Platte oder Wand in einem zwischen diesem Maximum und der Ankopplung der Strahlungsquelle an der inneren Oberfläche liegenden sensoraktiven Bereich der äußeren Oberfläche der Platte oder Wand durch eine Benetzung verändert wird. Hierbei verändert sich sowohl die Lage als auch die Höhe dieses Maximums je nach Art der Benetzung der äußeren Oberfläche der Platte oder Wand im sensorakativen Bereich, der im unbenetzten Zustand im wesentlichen zur Bildung dieses Maximums der Strahlungsstärke an der inneren Oberfläche der Platte oder Wand beiträgt. Grundsätzlich können sich mehrere lokale Maxima ausbilden. Als eine sowohl die benetzte Platte oder Wand als auch die Benetzungsflüssigkeit durchfließende Strahlung kommt beispielsweise eine Lichtstrahlung im sichtbaren, ultravioletten oder infraroten Bereich, eine Ultraschallstrahlung oder ggf. kapazitive Strahlungen infrage.

Allerdings muß das strahlungsdurchlässige Medium keine Platte oder Wand sein. Auch in einem anderen strahlungsdurchlässigen Medium wie z.B. der Luft kann die Anordnung Veränderungen der Refelexionsverhältnisse erkennen, sofern nur Meßstrecken zwischen der Anordnung, die üblicherweise Strahlungsquelle und Strahlungsempfänger umfaßt, und einem reflektierenden Element wie z.B. einem Spiegel oder einer Hand aufgebaut werden können. Allein rückgestrahltes Streulicht erlaubt der Anordnung z.B. ein Erkennen von Lageänderungen oder das Annähern einer Hand.

Die Anordnung von wenigstens zwei Meßstrecken, gleichgültig ob zwei Strahlungsquellen oder Gruppen von Strahlungsquellen einem Strahlungsempfänger oder ob mehrere Strahlungsempfänger einer Strahlungsquelle zugeordnet sind, gemäß Anspruch 1 hat den Vorteil, daß die Anordnung einen sehr weiten Bereich einer Veränderung z.B. durch Benetzung der Platte oder Wand detektiert und daß eine unmittelbare Fremdeinstrahlung auf den Strahlungsempfänger auch dann nahezu keine Wirkung auf die Auswertung der für die Messung oder Erkennung ausgesendeten aktiven Strahlung hat, wenn die Intensität der Fremdeinstrahlung um ein wesentliches Vielfaches größer ist als die Intensität der aktiven Strahlung, und daß die Fremdstrahlung aufgrund der erfindungsgemäßen Ausbildung der Anordnung die durch die Änderungen z.B. der Benetzung verursachten Änderungen der aktiven Strahlung nicht beeinflußt.

Die Sicherheit der Detektion der Veränderung wird dadurch noch gesteigert, daß eine Schaltfolgefrequenz der Schaltfolge zum abwechselnden Wirksamschalten der einem Strahlungsempfänger zugeordneten Strahlungsquellen oder Gruppen von Strahlungsquellen gewählt wird, die ein wesentliches Vielfaches größer ist als die schnellste zu erwartende Änderungsfolge einer auf den Strahlungsempfänger einwirkenden Fremdstrahlung, und daß nur ein Detektionssignal ausgewertet wird, dessen Änderungsfolge die gleiche Folgefrequenz wie die Schaltfolge aufweist.

Weitere vorteilhafte Ausgestaltungen der Erfindung sind in weiteren Unteransprüchen angegeben.

### KURZBESCHREIBUNG DER ZEICHNUNGEN

Die Erfindung wird nachfolgend anhand vorteilhafter Ausführungsbeispiele näher erläutert. In den zugehörigen Zeichnungen zeigen:
- Fig 1a: einen senkrechten Schnitt durch eine strahlendurchlässige Platte oder Wand mit einer angekoppelten Schaltungsquelle,
- Fig 1b: ein Diagramm mit einer die Strahlungsstärke der Rückstrahlung darstellenden Kurve der in Fig 1a dargestellten Anordnung,
- Fig 2: einen Ausschnitt einer benetzbaren Platte oder Wand in einer Ansicht auf deren innere Oberfläche mit aufgebrachten Strahlungsquellen und einem Strahlungsempfänger,
- Fig 3: ein Blockschaltbild einer Anordnung zum Messen oder Feststellen einer Benetzung mit einer in Fig 2 dargestellten Anordnung des sensoraktiven Bereiches einer Platte oder Wand,
- Fig 4: Diagramme a) bis d) über den zeitlichen Verlauf der Ausgangssignale des Strahlungsempfängers und des Detektionssignales,
- Fig 5: ein Blockschaltbild einer weiteren Anordnung zum Messen oder Feststellen einer Benetzung einer Platte oder Wand mit zwei besonders angekoppelten Strahlungsquellen und einer Regelanordnung,
- Fig 6: ein Diagramm des Verlaufes der Strahlungsstärkekurven der Rückstrahlung an der inneren Oberfläche der Platte oder Wand bei einer besonderen Ankoppelung zweier Strahlungsquellen an diese Oberfläche,
- Fig 7: ein Blockschaltbild einer Auswertevorrichtung,
- Fig 8: schematische Darstellung einer Windschutzscheibe,
- Fig 9: Diagramme a) bis d) des zeitlichen Verlaufs der Motorendschaltersignale und des Motors; des Signalverlaufs bei wenig und bei starker Benetzung; der veränderlichen Zeitkonstante,
- Fig 10: ein Blockschaltbild in einer weiteren Ausführung,
- Fig 11-13: Beispiele verschiedener Eingangssignale.

### BEVORZUGTE AUSFÜHRUNGSFORMEN DER ERFINDUNG

Die Erläuterungen erfolgen am Beispiel einer Anordnung zum Messen und Erkennen einer Benetzung, wenngleich die Anordnung auch andere nicht durch eine Benetzung hervorgerufenen Veränderungen der Reflexionsverhältnisse gegenüber einem Ruhe- oder Ausgangszustand erkennen kann. Zu denken ist hierbei z.B. an das Erkennen von Lageänderungen oder an die Annäherung eines ggf. nur Streulicht zurückstrahlenden Elements, wenn z.B. in Abhängigkeit der Annäherung einer Hand an ein Schaufenster bestimmte Reaktionen auftreten sollen. In den Ausführungsbeispielen ist das strahlungsdurchlässige Medium eine Platte oder Wand 1, jedoch können auch andere z.B. körperlose durchstrahlbare Medien eingesetzt werden, bei denen die Veränderungen durch ein den Aufbau von Meßstrecken ermöglichendes Einführen eines die aktive Strahlung der Strahlungsquellen rückstrahlenden Mittels in den Strahlengang der Meßanordnung oder Bewegen im Starhlengang hervorgerufen sind oder werden.

In Figur 1a ist eine in einer nicht näher dargestellten Ebene geschnittene Platte oder Wand 1 in einem Ausschnitt dargestellt. Die Ebene verläuft senkrecht zur Platte durch eine an die Platte oder Wand angekoppelte Strahlungsquelle 2, deren Strahlung in die Platte durch Linien 3 dargestellt ist. Die Strahlungsquelle ist an die innere Oberfläche 4 der Platte 1 so angekoppelt, daß die von ihr erzeugte Strahlung 3 ohne wesentliche Verluste einfließen kann. Diese Strahlung wird entsprechend den optischen Gesetzen an der der inneren Oberfläche 4 der Platte gegenüberliegenden äußeren Oberfläche 5 der Platte 1 zu einem mit zunehmendem Einstrahlwinkel a zunehmenden Anteil von der äußeren Oberfläche reflektiert (reflektierte Strahlung 6) und tritt an der inneren Oberfläche 4 der Platte oder Wand 1 teilweise wieder als rückstrahlende Strahlung 7 aus. Der Verlauf der Strahlungsstärke I dieser Rückstrahlung 7 abhängig vom Abstand x von der Strahlungsquelle ist als Kurve 8 im Diagramm der Fig 1b schematisch dargestellt. Diese Kurve weist im Abstandsbereich zwischen der Strahlungsquelle 2 und dem Austritt 9 der Rückstrahlung der ersten Totalreflexion an der inneren Oberfläche 4 der Platte z.B. ein erstes Maximum 10 auf, das im wesentlichen von der Abstrahlungscharakteristik der Strahlungsquelle 2 in die Platte 1 abhängt. Insofern können in der Signalkurve auch durchaus mehrere Maxima detektiert und ausgewertet werden. Diese Abstrahlungscharakteristik ist in Fig 1a schematisch als Kurve 11 dargestellt und kennzeichnet schematisch die winkelabhängige Strahlungsstärke der Strahlungsquelle in die Platte.

Tritt eine Benetzung der äußeren Oberfläche 5 der Platte oder Wand in einem besonders empfindlichen Bereich der äußeren Oberfläche zwischen einer Senkrechten 12 zur Platte am Ort der Strahlungsquelle und einer Senkrechten 12 m durch die Platte am Ort xm des ersten Maximums auf, nämlich in dem sensoraktiven Bereich 14 der Platte oder Wand, in dem von der äußeren Oberfläche die Rückstrahlung für das Maximum 10 reflektiert wird, was in Fig 1 durch einen Tropfen 13 in diesem sensoraktiven Bereich 14 schematisch dargestellt ist, wird das optische Reflexionssystem an der äußeren Oberfläche im Auflagebereich 15 des Tropfens 13 derart verändert, daß sich durch die veränderte Reflexion die Form der Kurve 8 der Strahlungsstärke der Rückstrahlung 7 in die durch die Benetzung geänderte Kurve 8' und sich die Lage xm des Maximums 10' in die neue Lage xm' des Maximums 10' der geänderten Kurve 8' verändert.

Ist im Bereich des Maximums 10 der Strahlungsstärke der Rückstrahlung 7, beispielsweise im Abstand xe von der Ankoppelstelle der Strahlungsquelle 2 ein Strahlungsempfänger 16, der in Fig la gestrichelt dargestellt ist, an die innere Oberfläche 4 der Platte oder Wand 1 angekoppelt, empfängt er über die Meßstrecke im unbenetzten Zustand des sensoraktiven Bereiches 14 der Platte eine durch die Kurve 8 gegebene Strahlungsstärke I1 der Rückstrahlung 7, im Falle des benetzten Zustandes des sensoraktiven Bereiches der Platte eine Strahlungsstärke I 2 der Strahlungskurve 8' der durch die Benetzung veränderten Rückstrahlung der Platte. Die Änderung der Strahlungsstärke von I 1 zu I 2 kennzeichnet die Benetzung des sensoraktiven Bereiches 14 der Platte oder Wand 1.

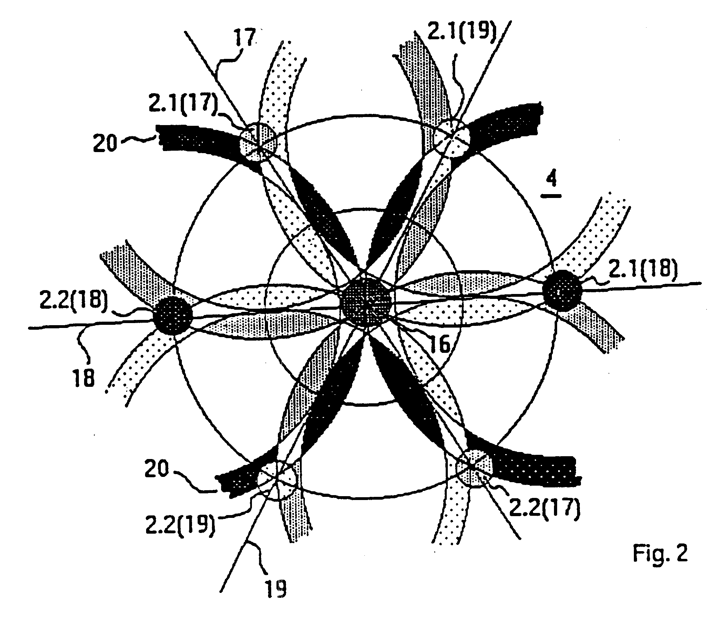

In Fig 2 ist ein Ausschnitt einer benetzbaren Platte oder Wand 1 in einer Ansicht auf die innere Oberfläche 4 der Platte mit drei Gruppen 17, 18 und 19 zu je zwei jeweils an die innere Oberfläche angekoppelten Strahlungsquellen dargestellt, nämlich den Strahlungsquellen 2.1 (17), 2.2 (17) der ersten Gruppe 17, den Strahlungsquellen 2.1 (18), 2.2 (18) der zweiten Gruppe 18 und der Strahlungsquellen 2.1 (19), 2.2 (19) der dritten Gruppe 19, die alle einem gemeinsamen Strahlungsempfänger 16 zugeordnet sind und die kreisförmig so um den gemeinsamen Strahlungsempfänger 16 angeordnet sind, daß der Strahlungsempfänger auf der etwa ringförmigen Zone 20 des Maximums 10 der Strahlungsstärke der Rückstrahlung der einzelnen Strahlungsquellen 2.1(17) bis 2.2(19) liegt.

Im dargestellten Ausführungsbeispiel bilden jeweils zwei sich bezüglich dem Strahlungsempfänger gegenüberliegende Strahlungsquellen eine Gruppe von zwei Strahlungsquellen. Selbstverständlich sind auch andere Anordnungen denkbar, bei denen einer Strahlungsquelle mehrere kreisförmig um sie herum angeordnete Strahlungsempfänger angeordnet sind, sofern nur wenigstens zwei Meßstrecken unabhängig voneinander abgefragt und ausgeregelt werden können.

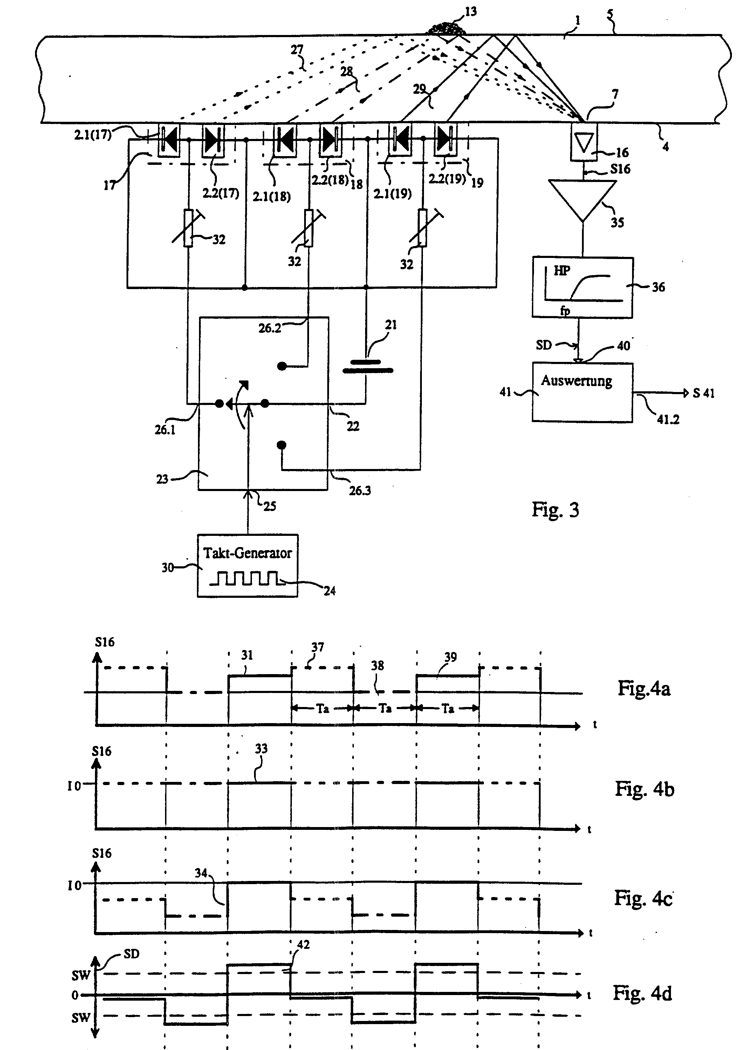

Die Wirkungsweise der in Fig 2 dargestellten Anordnung von drei Gruppen von Strahlungsquellen um einen zugehörigen Strahlungsempfänger wird anhand einer in Fig 3 als Ausführungsbeispiel dargestellten Schaltungsanordnung näher erläutert. In Fig 3 ist ein senkrechter Schnitt eines Ausschnittes aus einer benetzbaren Platte 1 oder Wand mit den sechs in Fig 2 schematisch dargestellten, an die innere Oberfläche 4 der Platte 1 angekoppelten Strahlungsquellen 2.1(17) bis 2.2(19) und dem zugehörigen, ebenfalls an die innere Oberfläche angekoppelten Strahlungsempfänger 16 schematisch dargestellt. Die Strahlungsquellen sind im dargestellten Ausführungsbeispiel lichtemitierende Dioden, deren einer Anschluß mit dem einen Pol einer Stromquelle 21 verbunden ist. Der andere Pol der Stromquelle ist mit dem Eingang 22 eines dreistelligen Folgeschalters 23 verbunden, der den Signaleingang 22 nach jedem Steuerimpuls 24 an seinem Steuereingang 25 mit dem nächstfolgenden Signalausgang 26.1, 26.2 oder 26.3 verbindet. Im dargestellten Ausführungsbeispiel, in dem der Signaleingang mit dem Signalausgang 26.1 verbunden ist, wird der Signaleingang durch den nächsten Steuerimpuls mit dem darauffolgenden Signalausgang 26.2 verbunden. Dadurch werden mit der Schaltfolge der Schaltfolgefrequenz fa des an den Steuereingang 25 des Folgeschalters 23 angeschlossenen Taktgenerators 30 die Strahlungsquellengruppen 17, 18 und 19 abwechselnd nacheinander an die Stromquelle 21 angeschaltet, so daß die Strahlungsquellengruppen 17, 18 und 19 abwechselnd nacheinander bis zum Einschalten der folgenden Gruppe wirksam geschaltet sind.

Der Verlauf der Strahlung der einzelnen Strahlungsquellengruppen in der strahlungsdurchlässigen Platte 1 ist in Fig 3 durch die unterschiedlich strukturierten Linien 27, 28 und 29 schematisch angedeutet. Der an der äußeren Oberfläche 5 der Platte reflektierte Anteil tritt an der inneren Oberfläche 4 der Platte teilweise wieder als Rückstrahlung 7 aus. Der in der Zone des Maximums der Strahlungsstärke der Rückstrahlung an die innere Oberfläche der Platte 1 angekoppelte Strahlungsempfänger 16, im dargestellten Ausführungsbeispiel ein Fotoelement, wandelt den empfangenen Strahlungsfluß in ein elektrisches Ausgangssignal S 16 um, dessen zeitlicher Verlauf 31 über einer Zeitachse t schematisch im Diagramm a) der Fig 4 dargestellt ist und das aus sich wiederholend aneinandergereihten Signalabschnitten 37, 38, 39 gebildet ist. Diese Signalabschnitte entstehen aus der Schaltfolge, mit denen die einzelnen Gruppen 17, 18 und 19 der Strahlungsquellen zur Abstrahlung einer Lichtstrahlung für einen kurzen Zeitabschnitt Ta, der gleich der Periodenzeit der Taktfrequenz f a des den Folgeschalter 23 steuernden Taktgenerators 30 ist, ein- und wieder ausgeschaltet werden.

An Stellgliedern 32 der Ausgänge 26.1 bis 26.3 des Folgeschaltens 23 wird die Strahlungsleistung der einzelnen Gruppen 17, 18 und 19 der Strahlungsquellen so eingestellt, daß jede Gruppe von Strahlungsquellen bei unbenetzter und ungestörter Platte oder Wand 1 für sich den selben Abgleichwert I 0 des Ausgangssignales S16 des Strahlungsempfängers erzeugt, wie im Diagramm b) der Fig 4 an einem zeitlichen Verlauf 33 des ungestörten und abgeglichenen Ausgangssignales S 16 des Strahlungsempfängers 16 schematisch dargestellt ist. Wird der sensoraktive Bereich 14 der Platte 1 beispielsweise durch einen Tropfen 13 benetzt, wie in Fig 3 schematisch dargestellt ist, wird die Strahlführung 27, 28, 29 durch diese Benetzung derart verändert, daß die Strahlungsflußanteile der einzelnen Strahlungsquellengruppen 17, 18 und 19 ihren Anteil an dem abgeglichenen Verlauf 33 des Ausgangssignales S 16 so verschieben, daß beispielsweise ein im Diagramm c) der Fig 4 dargestellter zeitlich ebener Verlauf 34 des Ausgangssignals S 16 des Strahlungsempfängers 16 entsteht. Dieses Ausgangssignal S 16 gelangt über einen Verstärker 35 und ein Hochpaßfilter 36 als Detektionssignal SD an den Signaleingang 40 einer Auswertanordnung 41. Die Grenzfrequenz fp des Hochpaßfilters 36 ist so bemessen, daß einerseits der Verlauf 34 des aus den einzelnen Abschnitten 37, 38 und 39 des bei einer zu erkennenden oder zu messenden Benetzung des sensoraktiven Bereiches der Platte oder Wand 1 gebildeten Ausgangssignales S 16 vom Filter noch annähernd übertragen wird und daß andererseits Schwankungen von Fremdstrahlungen auf den Strahlungsempfänger 16, die dieser ebenfalls in elektrische Signale umsetzt, nicht mehr im Detektionssignal SD wirksam werden. Dieser zeitliche Verlauf des am Ausgang des Hochpaßfilters 36 gebildete Detektionssignales SD ist im Diagramm d) der Fig 4 in einer dick ausgezogenen Kurve 42 schematisch dargestellt. Im dargestellten Ausführungsbeispiel enthält die Auswertanordnung 4 eine nicht näher dargestellte Schwellwertschaltung, die ein Steuersignal S 41 am Ausgang 41.2 der Auswertanordnung 41 erzeugt, wenn der Verlauf 42 des Detektionssignals SD einen bestimmten Schwellwert SW überragt. Dieses nicht näher dargestellte Steuersignal S 41 zeigt eine Benetzung der benetzten Platte 1 oder Wand im sensoraktiven Bereich 14 der Platte an und kann zur Steuerung von der Benetzung abhängiger Vorgänge verwendet werden.

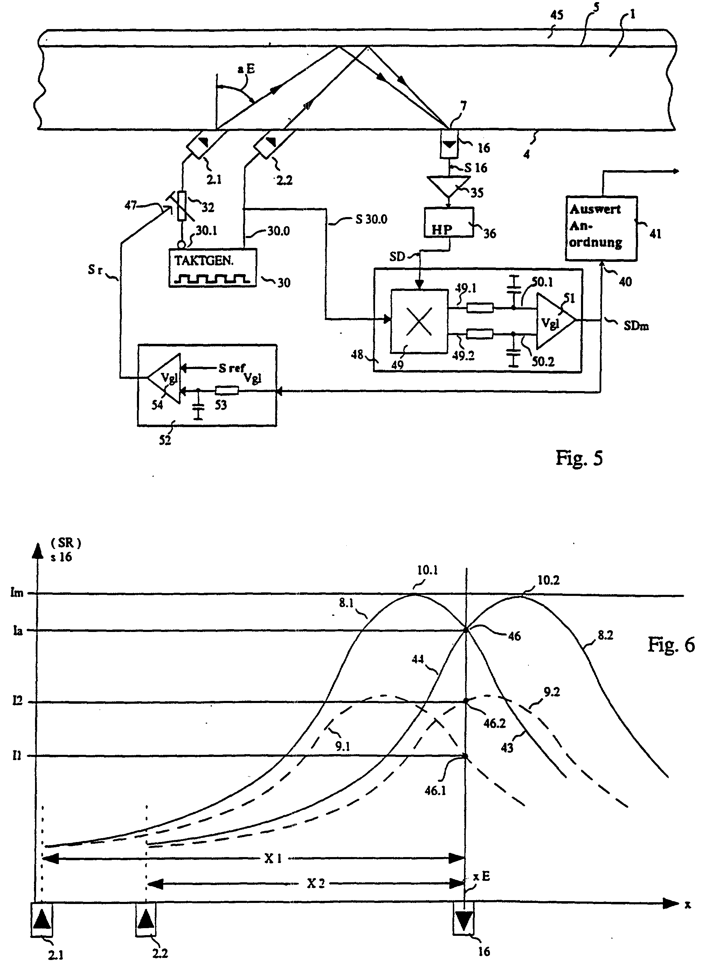

In Fig 5 ist ein Blockschaltbild eines weiteren Ausführungsbeispiels einer Anordnung zum Messen oder Feststellen einer Benetzung einer Platte 1 oder Wand dargestellt, das sich von dem in Fig 3 dargestellten Ausführungsbeispiel im wesentlichen durch die Art der Anordnung der Strahlungsquellen im sensoraktiven Bereich 14 der Platte oder Wand und durch eine zusätzliche Regelanordnung zur Regelung des Abgleiches der Strahlungsleistung der Strahlungsquellen unterscheidet.

Die beiden Strahlungsquellen 2.1 und 2.2 sind so an die innere Oberfläche 4 der Platte 1 angekoppelt, daß der Einstrahlungswinkel aE der maximalen Strahlungsstärke einer Strahlungsquelle 2.1 oder 2.2 in die Platte oder Wand etwa gleich dem Winkel ist, für den das Maximum 10 der Rückstrahlung 7 aus der inneren Oberfläche 4 der Platte oder Wand in einer die Platte oder Wand am Ort der Strahlungsquelle und des zugehörigen, ebenfalls an die innere Oberfläche angekoppelten Strahlungsempfängers 16 senkrecht durchdringenden Ebene seinen größten Wert erreicht. Dadurch wird ein ausgeprägteres erstes Maximum 10.1 der Kurve 8.1 oder 8.2 der Strahlungsstärke der Rückstrahlung 7 der Strahlungsquellen aus der inneren Oberfläche 4 der Platte oder Wand 1 erreicht, wie mittels der in Fig 6 dargestellten Kurven 8.1 und 8.2 der Strahlungsstärken I1 für die Rückstrahlung der Strahlungsquellen 2.1 und 2.2 schematisch veranschaulicht ist. Je ausgeprägter das Maximium der Kurve der Strahlungsstärke des aus der inneren Oberfläche der Platte oder Wand austretenden Strahlungsflußes einer Strahlungsquelle gestaltet werden kann, desto genauer und sicherer kann eine Benetzung der Platte oder Wand festgestellt und gemessen werden. Deshalb ist es besonders vorteilhaft, die einem Strahlungsempfänger zugeordneten Strahlungsquellen an die innere Oberfläche der Platte oder Wand anzukoppeln, selbst wenn eine Messung erst nach mehreren Reflexionen erfolgt. Darüberhinaus sind die beiden Strahlungsquellen 2.1 und 2.2 mit unterschiedlichen Abständen xl und x2 von ihrem zugehörigen Strahlungsempfänger entfernt, nämlich derart, daß in abgeglichenem Zustand der beiden Strahlungsquellen und bei unbenetzter Platte oder Wand der Strahlungsempfänger 16 auf der Rückflanke 43 des ersten Maximums 10.1 der Kurve 8.1 der Rückstrahlung der ersten Strahlungsquelle 2.1 und gleichzeitig auf der Vorderflanke 44 des ersten Maximums der Kurve 8.2 der von der zweiten Strahlungsquelle 2.2 verursachten Rückstrahlung aus der inneren Oberfläche 4 der Platte oder Wand 1 liegt. Dies erhöht die Genauigkeit und Sicherheit des Erkennens und Messens der Benetzung einer Platte oder Wand, da sich bei einer Benetzung des sensoraktiven Bereiches der Platte oder Wand das Maximum nicht nur in der Höhe, sondern auch in der Entfernung von der zugehörigen Strahlungsquelle ändert. So werden durch die Lageveränderung des Maximums auch kleine Änderungen der Benetzung deutlicher detektiert.

Mit dieser Anordnung der Strahlungsquellen 2.1 und 2.2 wird es möglich, eine Benetzung in der Gestalt eines gleichbleibenden Flüssigkeitsfilms oder einer gleichbleibenden Flüssigkeitsschicht 45, wie sie schematisch auf der äußeren Oberfläche 5 einer Platte oder Wand in Fig 5 dargestellt ist, festzustellen oder zu messen. Durch die Benetzung werden die Flanken 43 und 44 der beiden Kurven 8.1 und 8.2 der Strahlungsstärke der Rückstrahlung für die unbenetzte Platte derart verformt und verlagert, daß der beiden Kurven gemeinsame Abgleichpunkt 46 für das Ausgangssignal S16 des Strahlungsempfängers in zwei Kurvenpunkte 46.lund 46.2 mit zwei unterschiedlichen Amplitudenwerte I 46.1 und I 46.2 aufsplittet, wie Fig 6 veranschaulicht, so daß daraus ein Signalunterschied des Detektionssignal SD abgeleitet werden kann, zur Bildung eines Steuer- und/oder Meßsignales S 41.

Bei der in Fig 5 dargestellten Anordnung ist die Schalteranordnung zur Steuerung der beiden Strahlungsquellen 2.1 und 2.2 ein Taktgenerator 30 der an einem nicht invertierenden Ausgang 30.0 und an einem invertierenden Ausgang 30.1 abwechselnd einen Stromimpuls jeweils zur Anregung der Ausstrahlung der an den Ausgang angeschlossenen Strahlungsquelle für die Dauer des Stromimpulses erzeugt. Der eine Ausgang des Stromimpulsgenerators 30 enthält zur Einstellung des Stromwertes ein Stromstellglied 32, das durch ein Stellsignal Sr an seinem Stelleingang 47 verstellbar ist. Die Rückstrahlung dieser beiden Strahlungsquellen am Ankopplungsort XE (Fig 6) des Strahlungsempfängers 16 wird von diesem in ein elektrisches Ausgangssignal S 16 gewandelt, das entsprechend zu der in Fig 3 dargestellten Anordnung über einen Verstärker 35 und einen Hoch- oder Bandpaß 36 als Detektionssignal SD an den Ausgang der Filterschaltung 36 gelangt. An den Ausgang der Filterschaltung 36 ist eine Signalzentrierstufe 48 angeschlossen, die die Änderungen des Detektionssignales SD am Ausgang der Filterschaltung 36 einer Mittenspannung Uz aufprägt. Im dargestellten Ausführungsbeispiel enthält die Signalzentrierstrufe 48 einen Synchrondemodulator 49 mit zwei Demodulatorausgängen 49.1 und 49.2, die je einer Strahlungsquelle zugeordnet sind. Die Zuordnung erfolgt über einen Steuertakt S 30.0 des Stromimpulsgenerators 30, der auch die Abstrahlung der Strahlungsquellen steuert. Den Demodulatorausgängen 49.1 und 49.2 sind im dargestellten Ausführungsbeispiel Demodulationswertspeicher 50.1 und 50.2 nachgeschaltet, die den mittleren Amplitudenwert der von dem Synchrondemodulator 49 abgetasteten, den beiden Strahlungsquellen zugeordneten Signalabschnitten des Demodulationssignals SD momentan speichern und auf diese Weise einen Hüllkurvendemodulator bilden. Aus den momentanen mittleren Amplitudenwerten der beiden Detektionswertspeicher wird in einem anschließenden Operationsverstärker 51 der Differenzwert gebildet und einem Mittenwert aufgeprägt. Dieses so gebildete geglättete Detektionssignal SD m, das gegenüber dem Detektionssignal SD am Ausgang der Filterschaltung 36 wesentlich von Störungen befreit ist, wird sowohl einer Auswertanordnung 41 als auch einer Regelschaltung 52 mit einer hohen Regelzeitkonstanten Tv zugeführt. Im dargestellten Ausführungsbeispiel enthält die Regelschaltung ein Zeitkonstantenglied 53 und einen Vergleicher 54, der aus dem Vergleich mit einem Referenzsignal Sref ein Stellsignal Sr für den Stelleingang 47 des Stromstellgliedes 32 derart erzeugt, daß die Strahlungsleistung der mit dem Stromstellglied geregelten Strahlungsquelle 2.1 so verändert wird, daß der Unterschied der Detektionsamplitudenwerte am Ausgang der Signalzentrierstufe 48 gegen Null geht. Die Regelgeschwindigkeit, d.h. die Regelzeitkonstante Tv der Regelschaltung 52 ist hierbei so bemessen, daß sie um ein wesentliches Vielfaches größer ist als die langsamsten noch zu erfassenden Änderungen eines Benetzungsvorganges. Die Auswertanordnung 41 kann eingangsseitig auch unmittelbar mit dem Ausgang der beiden Detektionwertspeicher 50.1 und 50.2 verbunden werden, insbesondere dann, wenn mittels der Auswertanordnung die Benetzung gemessen werden soll. Die Regelzeitkonstante ist um ein wesentliches Vielfaches größer ist als eine Schwingungsperiode des Schaltfolgesignales, das die dem Strahlungsempfänger zugeordneten Strahlungsquellen oder Gruppen von Strahlungsquellen schaltet. Dadurch werden langsamere oder bleibende Änderungen im sensoraktiven Bereich der Platte oder Wand, die nicht von der Benetzung verursacht wurden oder die Benetzung nicht betreffen, beim Erkennen oder Messen der Benetzung nicht berücksichtigt und Einflüsse infolge von Alterung, Verschmutzung oder Temperaturunterschieden können leicht eliminiert werden, die bekannten Systemen Probleme bereiten. Falls erwünscht können auch mehrere Strahlungsempfänger, im Beispiel Fotodioden, und mehrere Strahlungsquellen, im Beispiel Leuchtdioden in Reihe geschalten werden, um dadurch die Anzahl der Meßstrecken und die Zuverlässigkeit der Meßergebnisse zu erhöhen. Z. B. können vier Leuchtdioden so angeordnet werden, daß eine Photodiode zentrisch in der Mitte von vier an den Ekken eines Vierecks angeordneten Leuchtdioden liegt. Dadurch ergeben sich 4 voneinander unabhängige Meßanordnungen. Durch Fortführung dieses Rasters läßt sich diese Anzahl leicht steigern, falls erhöhte Sicherheitsanforderungen an die Anordnung gestellt werden. Eine Ausbildung mit mehreren Strahlungsquellen, die einem Strahlungsempfänger zugeordnet sind, hat gegnüber der umgekehrten Anordnung (mehrere Empfänger - eine Quelle) den Vorteil, daß z.B. bei der Steuerung von Scheibenwischermotoren an Kraftfahrzeugen der Einfluß von Fremdlicht, das nur einen Teil der Meßstrecken beeinträchtigt besser herausgefiltert werden kann.

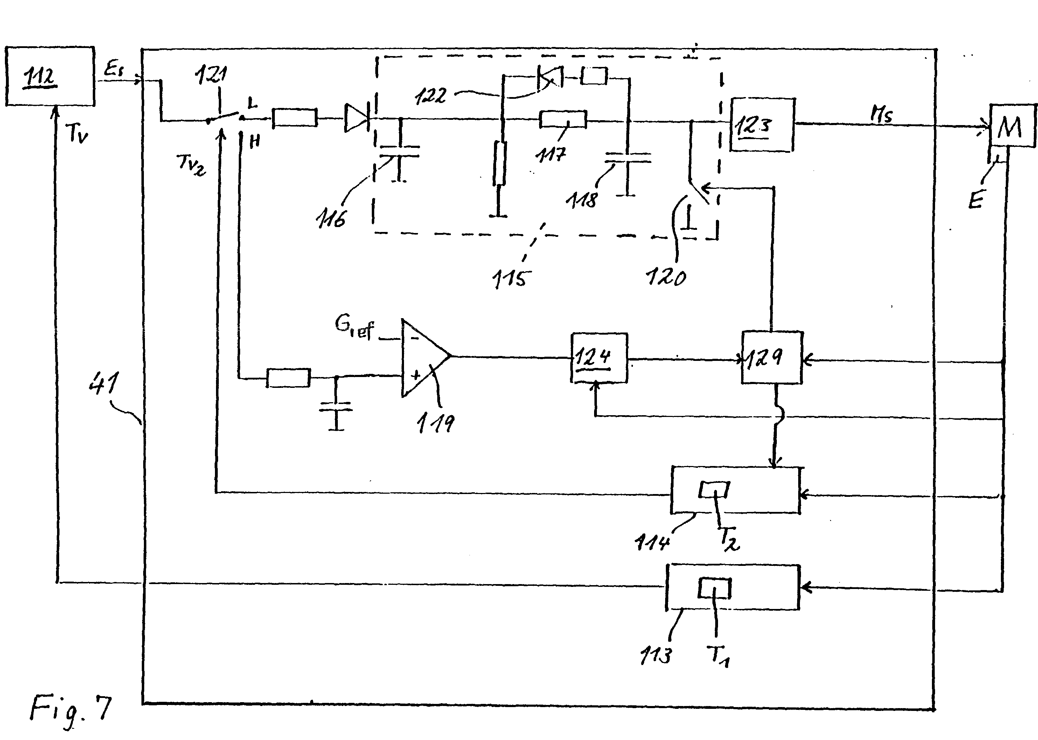

Sobald eine Vorrichtung (Scheibenwischer, Beregnungsanlage) in Abhängigkeit der Benetzung gesteuert wird, kann die Anordnung 112 in Fig. 7 unempfindlicher werden, damit weitere Änderungen zuverlässig erfaßt werden. Man denke nur an Schlieren, die ein Scheibenwischer zurückläßt und die bei hoher Empfindlichkeit zu einem Signal führen würden, obwohl sie von selbst abtrocknen. So kann z.B. die Zeitkonstante zumindest während des Überstreichens der Meßstrecken durch eine Beseitigungsvorrichtung so kurz sein, daß das Signal weitgehend unterdrückt ist, das von der Beseitigungsvorrichtung erzeugt ist, oder die Auswertanordnung weist eine Speichereinheit auf, die im wesentlichen die Signale speichert, die auftreten, solange die Zeitkonstante lang eingestellt ist, und die Signale zumindest teilweise ausblendet, die während des Überstreichens der Meßstrecken durch die Beseitigunggsvorrichtung bei kurzer Zeitkonstante anfallen.

Gegebenenfalls wertet die Auswertanordnung die während des Überstreichens der Meßstrecken durch eine Beseitigungsvorrichtung ermittelten Signale hinsichtlich ihrer Stärke aus und, sobald die Stärke einen einstellbaren Grenzwert unterschreitet, entlädt sie eine Speichereinheit, in Abhängigkeit deren Inhalts die Beseitigungsvorrichtung gesteuert ist. Dadurch kann die Anordnung schnell und flexibel reagieren, z.B. wenn bei einem Fahrzeug der Scheibenwischer schnell in den Ruhezustand zurückgeführt werden muß, weil das Fahrzeug an einer Ampel hält oder in einen Tunnel einfährt. Hier können die vom Überstreichen herrührenden Signale, also vor allem die vom Wasserschwall hervorgerufenen Signale auf integriert werden. Liegt der ermittelte Wert unter einem Grenzwert, wird die Rückstellung eingeleitet.

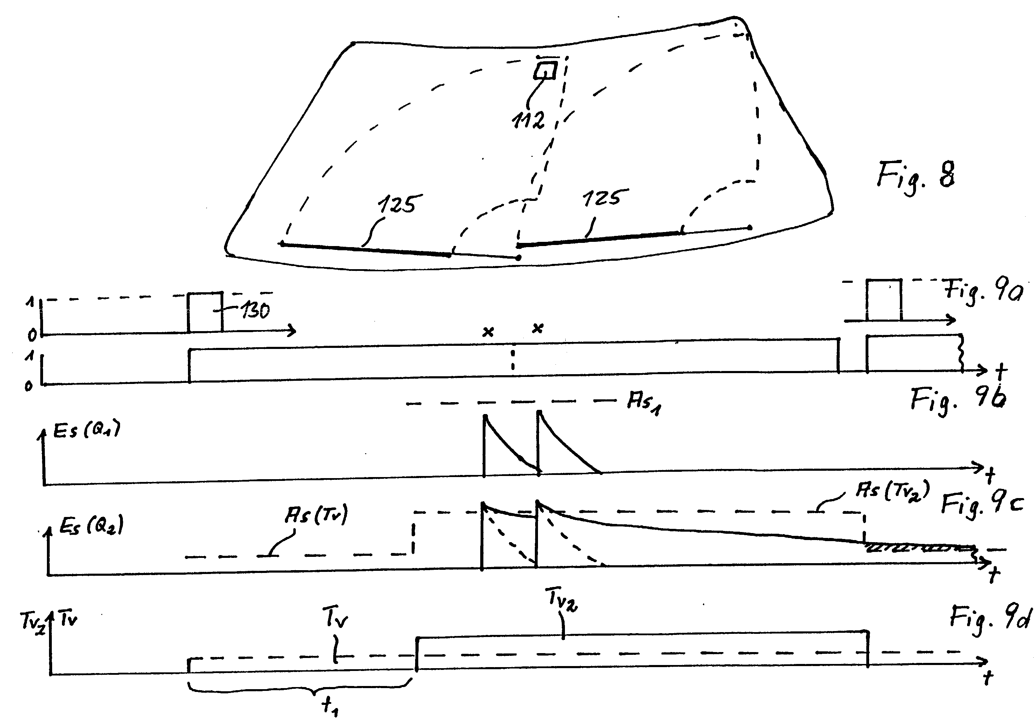

In Fig. 9a ist der zeitliche Verlauf eines Wischvorgangs beim Überstreichen einer Windschutzscheibe gemäß Fig. 2 mit Scheibenwischern 125 dargestellt, wobei der Scheibenwischer an den Positionen x die Anordnung überstreicht. Durch den vor den Scheibenwischern 125 hergeschobenen Wasserschwall kommt es zu starken Impulsen und Eingangssignalen Es (Q1) (z.B. Wassermenge Q1 in Fig 9b). Dieses Signal kann die Ergebnisse verfälschen, wird jedoch die Empfindlichkeit zu diesem Zeitpunkt verringert, kann dieses Signal keinen negativen Einfluß entfalten. Über Stellmittel 114 oder Schaltmittel 121 kann die Zeitkonstante z.B von Tv auf Tv2 geändert werden oder eine bestimmte Zeit t1 nach dem Startsignal 130 des Wischers erfolgt eine Empfindlichkeitsänderung z.B. mittels Timer T2 (Fig. 9d). Das Eingangssig nal Es(Q2) überschreitet dann nur wenig den gegenüber dem Schwellwert As(Tv) erhöhten Schwellwert As(Tv2).

Eine Speichereinheit 115 umfaßt einen ersten Speicher 116, der seine Signale über ein schwellwertabhängiges Dämpfungsglied 117 an einen weiteren Speicher 118 abgibt. Durch eine Überbrükkungsschaltung 122 können starke Signale unmittelbar dem weiteren Speicher 118 zugeführt werden. Je nach Speicherinhalt wird ein Meßwertsignal Ms über Oszillator 23 an den Scheibenwischermotor M geleitet, der Über seinen Endschalter E Signale für die Stellmittel 113, 114 geben kann. Diese Verbindung zum Endschalter ist jedoch nicht unbedingt erforderlich. Je nach Signalstärke kann der Scheibenwischer auch unmittelbar in Dauerbetrieb oder sogar in die schnellere Stufe des Wischermotors überführt werden.

Die während des Überstreichens ermittelten Werte können zur Auswertung für eine Trockenlaufsteuerung erfaßt werden. Muß z.B. ein Fahrzeug an einer Ampel abbremsen oder fährt in einen Tunnel ein, verringert sich ggf. schlagartig die zu beseitigende Wassermenge. Der Wasserschwall im Bereich des Scheibenwischers 125 wird geringer. Werden die beim Überstreichen anfallenden Signale mittels Integrator 119 aufintegriert, ergibt sich ein Maß für den Wasserschwall. Unterschreitet der Meßwert einen Grenzwert G ref und meldet z.B. der Flip-Flop-Schalter 124 ein Weiterlaufen des Wischers, entladen Schaltmittel 120 den Speicher 118 auf Weisung der Regelanordnung 129. Mit jedem neuen Startsignal des Wischers wird der Flip-Flop-Schalter wieder zurückgesetzt. Ein Trockenlaufen wird vermieden, eventuell muß jedoch der Wischer aus Sicherheitsgründen allmählich bis zum Nullzustand durch Herunterzählen heruntergeführt werden.

Mitunter können Einzelereignisse zu einer Auslösung der Anordnung führen, obwohl dazu kein Anlaß besteht. Es handelt sich hierbei z.B. bei einer an einem Fahrzeug angeordneten Anordnung um das Auftreffen eines Insekts oder um ein ähnliches einmaliges Ereignis. Gerade beim Fahrzeugführer können durch ein unbeabsichtigtes Auslösen des Scheibenwischers Schreckmomente entstehen. Die Anordnung erkennt nun, ob es sich um ein Einzelereignis handelt, und gibt den Signalfluß zur Auswertanordnung 41 erst beim Auftreten weiterer Signale frei.

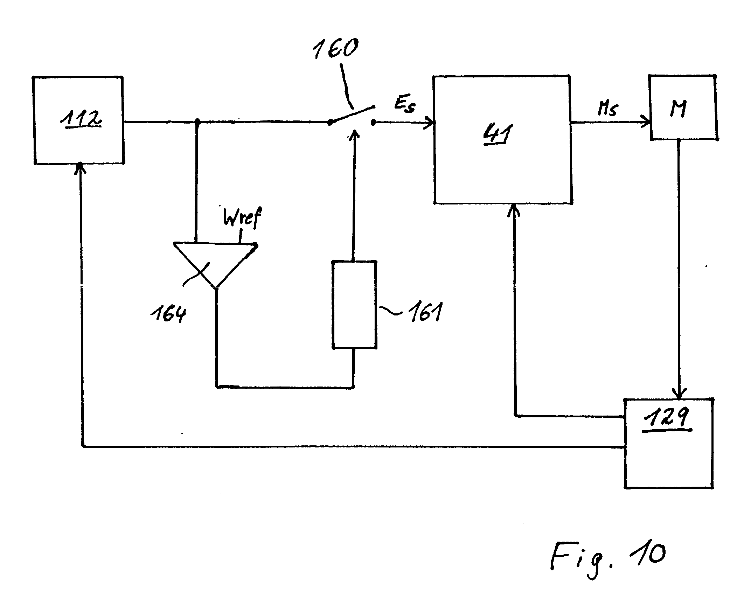

Der Auswertanordnung 41 sind dazu in Fig. 10 Schaltmittel 160 vorgeschaltet, die bei einem ersten Signal geöffnet sind. Das erste Signal wird auf einen Schwellwertschalter 164 geleitet, der das Signal mit einem Referenzsignal Wref vergleicht. Ist das Signal größer als der Referenzwert werden über einen Timer 161 die Schaltmittel 160 betätigt, wodurch erst die Verbindung zwischen Anordnung und Auswertanordnung 41 entsteht. Folgt das nächste Eingangssignal innerhalb der vom Timer 161 vorgegebenen Zeit, gelangt es unmittelbar zur Auswertanordnung 41, durchläuft aber auch den Schwellwertschalter 164. Wird der Schwellwert wieder überschritten, so wird die Laufzeit des Timers 161, der die befristete Verbindung herstellt, erneut gestartet.

Den Figuren 11-13 lassen sich die unterschiedlichen Eingangssignale entnehmen. Beim Auftreffen eines Insekts ergibt sich ein Eingangssignal Es über die Zeit t gemäß Fig. 11. Die Anordnung erkennt eine einmalige Veränderung, die ausgeregelt wird. Da jedoch in absehberer Zeit kein weiteres Signal auftritt, erfolgt kein Einfluß auf die Auswertanordnung 41.

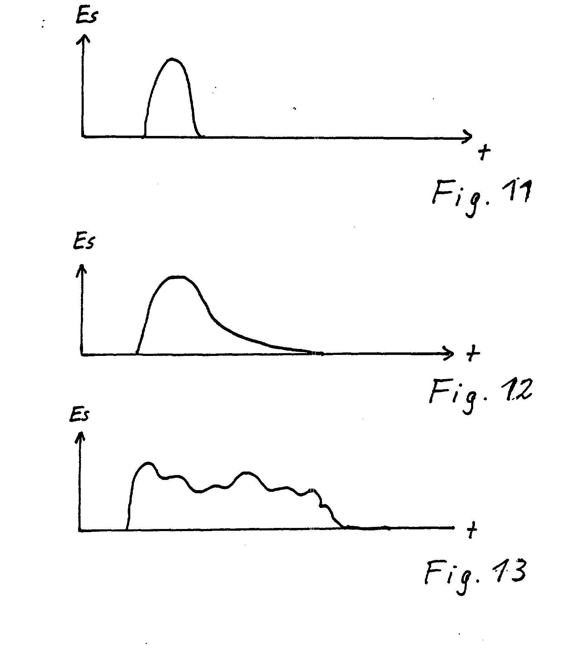

Bei einem Wassertropfen gemäß Fig. 12 regelt die Anordnung die Veränderung aus, wobei jedoch noch neue Veränderungen gemeldet werden, so daß sich ein gegenüber Fig. 11 langsameres Ausklingen ergibt. Bei entsprechendem Signalreferenzwert startet die Auswertanordnung die Beseitigungsvorrichtung. Dieser Wassertropfen unterscheidet sich nach seinem Signalverlauf deutlich von einem im Wind bewegten Tropfen gemäß Fig. 13, der aufgrund mehrerer Signale ggf. die Beseitigungsvorrichtung auslöst.

## Patentansprüche

1. Anordnung zum Messen oder Erkennen einer Veränderung an einem oder infolge eines rückstrahlenden Elements, das von der Anordnung durch ein für eine bestimmte Strahlung durchlässiges Medium getrennt ist, mit
- einem sensoraktiven Bereich (14) im Medium mit wenigstens zwei Meßstrecken mit zugeordneten Strahlungsquellen (2.1,2.2;17,18,19) zum Einstrahlen der bestimmten Strahlung (3) in das strahlungsdurchlässige Medium und mit wenigstens einem Strahlungsempfänger (16), wobei der Strahlungsempfänger im Überlappungsbereich der Zonen (20) eines Maximums (10) des Strahlungsstärkeverlaufs (8) der bei im Ruhezustand befindlichem sensoraktivem Bereich aus der dem rückstrahlenden Element gegenüberliegenden Seite des Mediums austretenden Rückstrahlung (7) der dem Strahlungsempfänger zugeordneten Strahlungsquellen zur Erzeugung eines der empfangenen Strahlung entsprechenden Detektionssignales (SD) angeordnet ist,
- einer Schalteranordnung (23,30) zu einem zeitabschnittsweisen Wirksamschalten jeder der einzelnen Meßstrecken in einer aufeinanderfolgenden, sich wiederholenden Schaltfolge einer bestimmten Schaltfolgefrequenz (fa),
- einer Einstellanordnung (32) zur Einstellung einer derart bemessenen Strahlungsleistung der der jeweiligen Meßstrecke zugeordneten Strahlungsquelle, daß bei im Ruhezustand befindlichem sensoraktivem Bereich jede Meßstrecke einen Abschnitt (37) des Detektionssignales erzeugt, dessen mittlerer Amplitudenwert gleich dem mittleren Amplitudenwert der der wenigstens einen anderen Meßstrecke zugeordneten Abschnitte (38,39) des Detektionssignales ist
- einer dem Strahlungsempfänger nachgeschalteten Filterschaltung (36) zur Übertragung des auf eine Schwingung der Schaltfolgefrequenz modulierten Detektionssignales (SD) an eine Auswertanordnung (41) zur Erzeugung eines Steuer- und/oder Meßwertsignales (S 41) aus dem in der Auswertanordnung gemessenen oder festgestellten Unterschied der den einzelnen Meßstrecken zugeordneten Abschnitte des Detektionssignales.

2. Anordnung nach Anspruch 1, dadurch gekennzeichnet, daß die wenigstens zwei Meßstrecken durch wenigstens eine Strahlungsquelle (2.1, 2.2) und mehrere Strahlungsempfänger (16) gebildet sind.

3. Anordnung nach Anspruch 1, dadurch gekennzeichnet, daß das Medium eine für die bestimmte Strahlung durchlässige Platte oder Wand (1) ist, an der die Anordnung angeordnet ist, und daß das rückstrahlende Element eine benetzbare äußere Oberfläche (5) der Platte oder Wand (1) ist, wobei durch den im Ruhezustand unbenetzten sensoraktiven Bereich (14) in der Platte oder Wand (1) die wenigstens zwei Meßstrecken verlaufen, und daß die Strahlungsquellen an die der benetzbaren äußeren Oberfläche (5) gegenüberliegende innere Oberfläche (4) der Platte oder Wand angekoppelt sind.

4. Anordnung nach Anspruch 1, dadurch gekennzeichnet, daß die Schalteranordnung ein Stromimpulsgenerator (30) mit einem nichtinvertierenden Ausgang (30.0) und einem invertierenden Ausgang (30.1) ist und daß in wenigstens einem (30.1) der Ausgänge ein Stromstellglied (32) zum Einstellen einer bestimmten Strahlungsleistung der zugehörigen, von dem Ausgang (30.1) geschalteten Strahlungsquelle (2.1) angeordnet ist.

5. Anordnung nach Anspruch 1, dadurch gekennzeichnet, daß die Filterschaltung ein Hochpaß (36) ist.

6. Anordnung nach Anspruch 1, gekennzeichnet durch zwei an die dem rückstrahlenden Element gegenüberliegende Seite des Mediums angekoppelte Strahlungsquellen (2.1,2.2), von denen die erste Strahlungsquelle (2.1) soweit vom zugehörigen gemeinsamen Strahlungsempfänger (16) entfernt ist, daß der Strahlungsempfänger auf der von der Strahlungsquelle abliegenden Flanke (43) des ersten Maximums (10.1) der bei im Ruhezustand befindlichem sensoraktivem Bereich (14) von der ersten Strahlungsquelle an dieser Seite des Mediums erzeugten Strahlungsstärkekurve (8.1) und die zweite Strahlungsquelle (2.2) soweit von dem gemeinsamen Strahlungsempfänger entfernt ist, daß der Strahlungsempfänger auf der der zweiten Strahlungsquelle zunächst liegenden Flanke (44) des ersten Maximums (10.2) der bei im Ruhezustand befindlichem sensoraktivem Bereich von der zweiten Strahlungsquelle an dieser Seite des Mediums erzeugten Strahlungsstärkekurve (8.2) liegt.

7. Anordnung nach Anspruch 1, gekennzeichnet durch eine dem Ausgang der Filterschaltung (36) nachgeschaltete, eine Signalzentrierstufe (48) und einen Regelsignalgenerator (52) enthaltende Regelanordnung
- in der die Signalzentrierstufe (48) für jede einem Strahlungsempfänger (16) zugeordnete Strahlungsquelle (2.1,2.2) einen Detektionswertspeicher (50.1,50.2) zum Speichern des mittleren Amplitudenwertes jeweils des der Strahlungsquelle (z.B. 2.1) zugeordneten Signalabschnittes (z.B. 37) des Detektionssignales (SD) enthält,
- in der die Signalzentrierstufe außerdem eine Tastschaltung (49) zum Abtasten des Amplitudenwertes der der wirksam geschalteten Strahlungsquelle zugeordneten Signalabschnitte des Detektionssignales und zum Einspeichern des mittleren Amplitudenwertes dieser Signalabschnitte in den zugehörigen Detektionswertspeicher und eine Vergleicheranordnung (51) zur Erzeugung eines Differenzwertes aus den gespeicherten Amplitudenwerten zweier Detektionswertspeicher enthält
- und in der der Regelsignalgenerator (52) der Signalzentrierstufe nachgeschaltet ist und eine gegenüber der Schwingungsperiode der bestimmten Schaltfolgefrequenz (fa) um ein wesentliches Vielfaches größere Regelzeitkonstante (Tr) für ein im Regelsignalgenerator aus der Differenz der mittleren Amplitudenwerten der den einzelnen Meßstrecken zugeordneten Signalabschnitte des Detektionssignales erzeugtes Regelsignal (Sr) zur Einstellung des wenigstens einen Stromstellgliedes (32) enthält, welche Einstellung durch das Regelsignal derart geführt ist, daß die Differenz der mittleren Amplitudenwerte der Signalabschnitte des Detektionssignales gegen Null geht.

8. Anordnung nach Anspruch 1, gekennzeichnet durch eine Ankopplung der einem Strahlungsempfänger (16) zugeordneten Strahlungsquellen (2.1,2.2) an die innere Oberfläche (4) einer Platte oder Wand (1) derart, daß der Einstrahlungswinkel (aE) des Strahles der maximalen Strahlungsstärke (I) einer Strahlungsquelle (2.1) in die Platte oder Wand etwa gleich dem Winkel ist, für den das erste Maximum (10) der Rückstrahlung (7) aus der inneren Oberfläche (4) der Platte oder Wand (1) in einer die Platte oder Wand am Ort der Strahlungsquelle (2.1) und des zugehörigen Strahlungsempfängers (16) senkrecht durchdringenden Ebene seinen größten Wert erreicht.

9. Anordnung nach Anspruch 1, dadurch gekennzeichnet, daß die Auswertanordnung (41) die während des Überstreichens der Meßstrecken durch eine Beseitigungsvorrichtung ermittelten Signale hinsichtlich ihrer Stärke auswertet und, sobald die Stärke einen einstellbaren Grenzwert unterschreitet, eine Speichereinheit (115) entlädt, in Abhängigkeit deren Inhalts die Beseitigungsvorrichtung gesteuert ist.

10. Anordnung nach Anspruch 9, dadurch gekennzeichnet, daß bei Unterschreiten des Grenzwerts Schaltmittel (120) die Beseitigungsvorrichtung zurückschalten und Stellmittel (114) die Zeitkonstante auf einen zeitlich langen Wert einstellen.

11. Anordnung nach Anspruch 1, dadurch gekennzeichnet, daß der Auswertanordnung Schaltmittel (160) vorgeschaltet sind und daß wenigstens ein erstes Eingangssignal (Es) dadurch unterdrückt wird, daß es erst die Verbindung für folgende Signale zur Auswertanordnung (41) herstellt.

12. Anordnung nach Anspruch 11, dadurch gekennzeichnet, daß das erste Eingangssignal (Es) einen Timer (161) betätigt, der . die Verbindung zwischen der Anordnung und der Auswertanordnung (41) für einen bestimmten Zeitraum aufbaut, und daß die folgenden Signale den Zeitraum neu starten.

## Claims

1. An arrangement for measuring or detecting a change in a reflective element or as a result of one, which element is separated from the arrangement by means of a medium which can be penetrated by a particular radiation, characterized by
- a sensor-active area (14) in the medium with at least two measured sections with associated radiation sources (2.1, 2.2; 17, 18, 19) for radiating the defined radiation (3) into the radiation-permeable medium, and having at least one radiation receiver (16) disposed in the overlap area of the zones (20) of a maximum (10) of the course (8) of the radiation strength of the reflected radiation (7) of the radiation source assigned to the radiation receiver, emerging from the side of the medium opposite the reflecting element when the sensor-active area is in a state of rest,
- a switch arrangement: (23, 30) for a periodic actuation of the individual measured sections in a successive, repeating switching sequence of a particular switching sequence frequency (fa),
- an adjusting device (32) for adjusting a radiation output of the individual radiation sources which is measured in such a way that when the sensoractive area is in the state of rest, each measured section produces a part (37) of the detection signal, whose average amplitude value is equal to the average amplitude value of the parts (38, 39) of the detection signal which are associated with the at least one other measured section,
- and a filter circuit (36) , downstream of the radiation receiver (s) for the transmission of the detection signal (SD) , which is modulated to an oscillation of the switching sequence frequency, to an evaluation device (41) for generating a control and/or measurement value signal (S 41) from the difference of the parts of the detection signal (SD) which are associated with the individual measured sections, which difference is measured or detected in the evaluation device.

2. The arrangement according to claim 1, characterized in that the at least two measured sections are comprised of at least one radiation source (2. 1, 2 .2) and a plurality of radiation receivers (16).

3. The arrangement according to claim 1, characterized in that the medium is a plate or wall (1) , which is permeable to the particular radiation and on which the arrangement is disposed, and that the reflective element is a wettable outer surface (5) of the plate or wall (1) , wherein in the state of rest, the at least two measured sections extend through the sensor-active area (14) in the plate or wall (1) , which sensor-active area is dry when in the state of rest, and that the radiation sources are coupled to the inner surface (4) of the plate or wall, opposite the wettable outer surface (5).

4. The arrangement according to claim 1, characterized in that the circuit arrangement is a current pulse generator (30) with a non-inverting output (30.0) and an inverting output (30.1) and that a current adjusting member (32) for adjusting a particular radiation output of the affiliated radiation source (2.1), which is switched by the output (3 0. 1) , is disposed in at least one (3 0.1) of the outputs.

5. The arrangement according to claim 1, characterized in that the filter circuit is a high-pass (36).

6. The arrangement according to claim 1, characterized by means of two radiation sources (2.1, 2.2) coupled to the side of the medium opposite from the reflective element, of which the first radiation source (2.1) is spaced apart from the affiliated common radiation receiver (16) at such a distance, that the radiation receiver on the edge (43) of the first maximum (10.1) of the radiation intensity curve (8.1) remote from the radiation source, which is generated by the first radiation source an this side of the medium, when the sensor-active area (14) is in the state of rest, and the second radiation source (2.2) is spaced apart from the common radiation receiver by such a distance that the radiation receiver is disposed on the edge (44) of the first maximum (10.2) of the radiation intensity curve (8.2) , which edge is disposed next to the second radiation source and which curve, when the sensor-active area is in the state of rest, is generated by the second radiation source on this side of the medium.

7. The arrangement according to claim 1, characterized by means of a regulating device, which includes a regulation signal generator (52) and a signal centering stage (48) and follows the output of the filter circuit (36) ,
- in which the signal centering stage (48) for each radiation source (2.1, 2.2) associated with a radiation receiver (16), includes a detection value memory (50.1, 50.2) for storing the average amplitude value of each of the signal parts (e.g. 37) of the detection signal (SD) , which parts are associated with the radiation source (e.g. 2.1),
- in which the signal centering stage additionally includes a scanning circuit (49) for scanning the amplitude value of the signal parts of the detection signal associated with the actuated radiation source and for storing the average amplitude value of these signal parts in the affiliated detection value memory, and a comparing device (51) for generating a difference value from the stored amplitude values of two detection value memories, - and in which the regulation signal generator (52) is connected downstream of the signal centering stage and contains a control time constant (Tr) , essentially many times greater than the oscillation period of the particular switching sequence frequency (fa) , for a regulation signal (Sr) which is produced in the regulation signal generator from the difference of the average amplitude values of the signal parts of the detection signal, which parts are associated with the individual radiation measured sections, and which regulation signal is for adjusting the at least one current adjusting member (32), which adjustment is guided by the regulation signal in such a way that the difference of the average amplitude values of the signal parts of the detection signal approaches zero.

8. The arrangement according to claim 1, characterized by means of a coupling of the radiation sources (2.1, 2.2) associated with a radiation receiver (16) to the inner surface (4) of a plate or wall (1) in such a way that the angle of arrival (aE) of the beam of the maximal radiation intensity (I) of a radiation source (2.1) on the plate or wall is approximately equal to the angle for which the first maximum (10) of the reflection (7) from the innesurface (4) of the plate or wall (1) reaches its greatest value in a plane which passes perpendicularly through the plate or wall at the location of the radiation source (2.1) and the affiliated radiation receiver (16).

9. The arrangement according to claim 1, characterized in that the evaluation device (41) evaluates the signals, which are detected with regard to their intensity while a removal device is sweeping across the measured sections and, as soon as the intensity falls below an adjustable limit value, unloads a memory unit (115) whose contents govern the control of the removal device.

10. The arrangement according to claim 9, characterized in that when the strength falls below the limit value, switching means (120) reset the removal device and adjusting means (114) adjust the time constant to a chronologically long value.

11. The arrangement according to claim 1, characterized in that the evaluation device is preceded by switching means (160) which suppress at least one first input signal (Es) because they first produce the connection to the evaluation device (41) for the subsequent signals.

12. The arrangement according to claim 11, characterized in that the first input signal (Es) actuates a timer (161) which forms the connection between the arrangement and the evaluation device (41) for a particular time interval and that the subsequent signals re-start the time interval.

## Revendications

1. Dispositif de mesure ou de détection d'une modification sur ou due à un élément réfléchissant qui est séparé du dispositif par un milieu particulier perméable au rayonnement comprenant
- une zone active de mesure (14) dans le milieu avec au moins deux voies de mesure comprenant des sources de rayonnement associées (2.1,2.2;17,18,19) pour émettre des rayonnements prédéterminés (3) dans le milieu perméable au rayonnement et au moins un capteur de rayonnement (16) dans lesquels le capteur de rayonnement est agencé dans le secteur de recouvrement de la zone (20) du maximum (10) de l'évolution (8) de l'intensité de rayonnement du rayonnement réfléchi (7) parvenant de la zone active de mesure en condition initiale de l'élément réfléchissant se situant dans le milieu du côté opposé aux sources de rayonnement associées au capteur de rayonnement pour génération d'un signal de détection (SD) à partir du rayonnement reçu correspondant,
- un dispositif de circuits (23,30) pour connexion effective séquentiellement dans le temps de chacune des voies de mesure l'une après l'autre selon une séquence de connexion répétitive à une fréquence de connexion prédéterminée (fa),
- un dispositif de réglage (32) pour régler une intensité de rayonnement ainsi mesurée d'une source de rayonnement associée à chaque voie de mesure de telle sorte que la zone active de mesure en condition initiale de chaque voie de mesure produit une partie (37) de signal de détection dont la valeur d'amplitude moyenne soit identique à la valeur d'amplitude moyenne de la partie (38,39) du signal de détection correspondant à au moins une autre voie de mesure,
- un circuit de filtrage (36) branché à la suite du capteur de rayonnement pour transférer le signal de détection (SD) modulé par la période de la fréquence de connexion vers un dispositif de traitement (41) pour générer un signal (S 41) de pilotage et/ou de mesure à partir de différences mesurées ou établies dans le dispositif de traitement entre les parties de signaux de détection correspondant aux voies de mesure individuelles.

2. Dispositif selon la revendication 1, caractérisé en ce que les au moins deux voies de mesure sont formées par au moins une source de rayonnement (2.1,2.2) et plusieurs capteurs de rayonnement (16).

3. Dispositif selon la revendication 1, caractérisé en ce que le milieu est une plaque ou une paroi (1) perméable au rayonnement particulier et contre laquelle le dispositif est agencé, et en ce que l'élément réfléchissant est la face superficielle externe (5) susceptible d'être mouillée de la plaque ou paroi (1) dans la zone active de mesure (14) initialement non mouillée par laquelle passe au moins deux voies de mesure, et en ce que les sources de rayonnement sont accouplées en la face superficielle interne (4) situées en vis-à-vis de la face superficielle externe (5) susceptible d'être mouillée.

4. Dispositif selon la revendication 1, caractérisé en ce que le dispositif de circuit comprend un générateur d'impulsions de courant (30) avec une sortie non inversée (30.0) et une sortie inversée (30.1) et en ce que dans au moins l'une des sorties (30.1) est agencé un organe de réglage de courant (32) pour régler à une intensité de rayonnement prédéterminée la source de rayonnement correspondante branchée à cette sortie (30.1).

5. Dispositif selon la revendication 1, caractérisé en ce que le circuit de filtrage est un filtre passe-haut (36).

6. Dispositif selon la revendication 1, caractérisé en ce que deux sources de rayonnement (2.1,2.2) sont agencées en le côté opposé à l'élément réfléchissant, sources dont la première source de rayonnement (2.1) est éloignée du capteur de rayonnement (16) commun correspondant de telle sorte que ce capteur de rayonnement se situe sur le flanc (43) orienté vers la source de rayonnement du premier maximum (10.1) de la courbe d'intensité de rayonnement (8.1) produite par la zone active de mesure (14) en condition initiale par la première source de rayonnement de ce côté du milieu, sources dont la seconde source de rayonnement (2.2) est éloignée du capteur de rayonnement commun correspondant de telle sorte que ce capteur de rayonnement se situe sur le flanc (44) ultérieur par rapport à cette seconde source de rayonnement du premier maximum (10.2) de la courbe d'intensité de rayonnement (8.2) produite par la zone active de mesure en condition initiale par la seconde source de rayonnement de ce côté du milieu.

7. Dispositif selon la revendication 1, caractérisé par un étage de centrage de signal (48) et un circuit de réglage de signal (52) contenant un dispositif de réglage branchés à la suite du circuit de filtrage (36),
- cet étage de centrage (48) contenant une mémoire de valeur détectée (50.1,50.2) pour chaque source de rayonnement (2.1,2.2) associée au capteur de rayonnement (16) afin de mémoriser la valeur d'amplitude moyenne de chacune des parties (ex. 37) du signal de détection (SD) associée à cette source de rayonnement (ex. 2.1),
- cet étage de centrage contenant un démodulateur (49) pour séparer les valeurs d'amplitude des parties de signaux du signal de détection associées aux source de rayonnement effectivement connectées et pour mémoriser les valeurs d'amplitude moyenne de ces parties de signaux dans leur mémoire de valeur détectée correspondante, ainsi qu'un dispositif comparateur (51) pour produire une valeur de différence entre les valeurs d'amplitude mémorisées dans les deux mémoires de valeurs détectées,
- ce circuit de réglage de signal (52) étant branché à l'étage de centrage, et comprenant une constante de temps (Tr) d'un ordre de grandeur sensiblement plus grand par rapport à la fréquence de la séquence connexion (fa) prédéterminée pour un signal de réglage (Sr) produit dans le circuit de réglage de signal à partir de la différence entre les valeurs d'amplitude moyennes des parties de signaux du signal de détection associées aux voies de mesure afin de régler au moins l'un des l'organe de réglage de courant (32), lequel réglage est effectué par le signal de réglage de telle sorte que la différence des valeurs d'amplitude moyennes des parties de signaux du signal de détection tende vers la valeur zéro.

8. Dispositif selon la revendication 1, caractérisé par le couplage de sources de rayonnement (2.1,2.2) associées à un capteur de rayonnement (16) en la face superficielle (4) de la plaque (1) de telle sorte que l'angle d'émission (aE) de l'intensité maximum (I) de rayonnement de la source de rayonnement (2.1) dans la plaque ou paroi soit sensiblement égal à l'angle pour lequel le maximum (10) du rayonnement réfléchi (7) sortant de la face superficielle (4) de la plaque ou paroi (1) atteigne sa plus grande valeur au sein d'un plan passant orthogonalemement dans la plaque ou paroi aux endroits des sources de rayonnement et du capteur de rayonnement (16).

9. Dispositif selon la revendication 1, caractérisé en ce que le dispositif d'évaluation (41) traite le signal produit pendant l'interférence d'un dispositif d'essuyage sur les voies de mesure en regard de son intensité, et dès que cette intensité dépasse une valeur de seuil prédéterminée, elle décharge une unité de mémoire (115) en dépendance du contenu de laquelle le dispositif d'essuyage est piloté.

10. Dispositif selon la revendication 9, caractérisé en ce que lors du dépassement de la valeur de seuil, des moyens de connexion (120) arrêtent les moyens d'essuyage et des moyens de réglage (114) établissent la constante de temps à un valeur de temps longue.

11. Dispositif selon la revendication 1, caractérisé en ce que le dispositif de traitement est relié en amont à des moyens d'interrupteurs (160), et en ce qu'au moins un premier signal d'entrée (Es) est appliqué de telle sorte qu'il établit d'abord une liaison pour les signaux suivants vers le dispositif de traitement (41).

12. Dispositif selon la revendication 11, caractérisé en ce que le premier signal entrant (Es) enclenche un relai temporel (161) établissant la liaison entre le dispositif et le dispositif de traitement (41) pendant une durée prédeterminée, en en ce que les signaux suivants redémarrent cette durée.
